(19) **Europäisches Patentamt / European Patent Office / Office européen des brevets**

(11) **EP 4 654 248 A1**

(12) **EUROPEAN PATENT APPLICATION**

(43) Date of publication:
26.11.2025 Bulletin 2025/48

(51) International Patent Classification (IPC):
$H01K\ 1/04^{(2006.01)}$   $G01J\ 5/53^{(2022.01)}$
$H01K\ 1/14^{(2006.01)}$   $H01K\ 1/62^{(2006.01)}$
$H05B\ 3/12^{(2006.01)}$   $H05B\ 3/20^{(2006.01)}$

(21) Application number: 24177420.7

(22) Date of filing: 22.05.2024

(52) Cooperative Patent Classification (CPC):
H01K 1/14; G01J 3/10; G01J 3/108; G01J 5/53;
H01K 1/04; H01K 1/62; H05B 3/141; H05B 3/145;
H05B 3/24; H05B 2203/032

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: 4K-MEMS SA
2072 St-Blaise (CH)

(72) Inventors:
• IMBODEN, Matthias
2072 St-Blaise (CH)
• STANLEY, Ross
1066 Epalinges (CH)

(74) Representative: P&TS SA (AG, Ltd.)
Avenue J.-J. Rousseau 4
P.O. Box 2848
2001 Neuchâtel (CH)

(54) **STANDARD OF TEMPERATURE AND/OR RADIANT INTENSITY**

(57) A visible/IR light source comprising a plate 30 (e.g. a micro-hotplate) and one or more heaters 34 arranged to heat the plate to an incandescent state such that an emitting surface of the plate emits thermal radiation The source includes on the plate, or on the heaters that heat and support the plate, a material 40a-d exhibiting a change of phase in an operating temperature range of the light source. The transition is detectable by observing the resistance profile R(t) of the heaters or from a radiation sensor and may be used to stabilise the operating point of the source.

Fig. 2

EP 4 654 248 A1

## Description

### Technical domain

The invention relates to the field of microelectromechanical devices (MEMS) and especially to an incandescent light source that may be used as a source of infrared and/or visible light.

The invention also relates, in embodiments, to reference light sources that are intended to define and propagate a metrological standard.

### Related art

Often there is a need for radiation sources in the infrared or visible spectrum that are constant and reproducible in intensity. Such references are useful, for example, in calibrating of optical thermometers, pyrometers, radiometers, spectrometers, and in many other applications.

It is known to accomplish this with a source of blackbody radiation whose temperature is strictly controlled. The spectral radiance of such a source is entirely determined, through Planck's law, by its temperature and its coefficient of optical emissivity.

Blackbody cavities in thermal contact with a substance at its fixed freezing temperature, for example gold, are used as standard sources in radiometry and photometry. Examples of such realizations can be found in US 3077539 A, DE 10110131 A1 and US 7837382 B2, among others.

MEMS micro-hotplates are used as thermal emitters, especially in the infrared and for applications such as spectroscopy, gas sensing, and the like, as described, for example, by WO 2021/144463.

### Short disclosure of the invention

An aim of the present invention is the provision of a radiation emitter that overcomes the shortcomings and limitations of the state of the art.

Another aim of the invention is to propose a radiation emitter whose spectral radiance is well-characterized and stable, for use as standard source, calibration, and metrology applications.

Advantageously, the sources of embodiments of the invention can link the hotplate temperature to a phase transition of a substance, stabilizing in this way the emission intensity.

In operations, the hotplate is heated or cooled rapidly such that its instantaneous temperature crosses the transition temperature of the phase change material chosen. The resistance is observed as a function of time during this transient. "Rapidly" denotes in this context a transient phenomenon happening at a time scale shorter than the thermalization time of the emitter device.

Ideally, as postulated by the Gibb's phase rule, the heat capacity during the phase change will appear momentarily infinite. The resistance of the emitter device, which is directly linked to tis temperature, exhibits then a horizontal plateau where $dR/dt = 0$. In practice, thermalization effects and other phenomena may alter the ideal scenario, but the transition will still manifest itself by a change of slope or some remarkable feature in the R(t) function.

During the phase transition, the temperature of the heater will be stably anchored to the melting/freezing/sublimation point of the phase change substance, and the difference between the heating power and the power losses is consumed by the latent heat of the substance that undergoes the phase change. The larger the latent heat of the phase transformation relative to the emitter's heat capacity, the longer and the easier to observe the phase change will be.

The duration of the phase change will be influenced also by the separation between the transition temperature and the final equilibrium temperature. When these temperatures are close, the change of phase happens at a temperature close to the final equilibrium temperature at which the heating power is exactly balanced by the heat losses; therefore, the net power available for the phase change will be rather small and the transition will be longer in time, resulting in a longer interval where the temperature remains essentially constant. In typical implementations, the transition times will be on the order of the thermalization time of the system, for example in the interval 0.1-100 ms or, more often, in the interval 1-10 ms.

The aims of the invention are attained by the object of the attached claims, and especially by a light source comprising a plate and one heater or a plurality of heaters arranged to heat the plate to an incandescent state such that an emitting surface of the plate emits radiation in the infrared and/or visible spectrum and a phase-change material exhibiting a change of phase at a transition temperature that is in an operating temperature range of the light source, the phase-change material lying on a surface of the plate or on a surface of the heater or heaters.

Embodiments of the invention may add other advantageous features, according to the need, as presented in the dependent claims. these features, which despite their usefulness are not essential, include the use of a phase-change material that sublimates at the transition temperature without a liquid phase. This avoids the complications linked to the need to contain the liquid phase and prevent it from escaping or falling off. The phase-change material, be it sublimating or fusible, may be one between Al, Ti, Be, Rh, V, Cu, Au, Ag, Ni, Pd, Pt, Mo, Nb, Ir, Pt, Zn, Cr, Sb, Cd, As, Si. Alloys are also possible, insofar as they exhibit one phase change at the desired temperature. It is possible to find material and combinations of materials that provide many useful reference points between 800 K and 3000 K.

Phase-change materials that, in the molten state, wet the surface on which they lie are more effectively contained and less liable of dripping or escaping.

The change of phase may be detected by observing the temperature of the plate during heating and is marked by an interval during which the temperature is essentially constant. Embodiment of the invention include resistive heaters that serve also as temperature sensors. Their resistance is correlated with the instantaneous temperature, and the phase transition is signalled by an interval during which the resistance remains constant. It is possible to control the heating power to maintain the temperature stable at the transition temperature, at least during a certain interval of time.

When the device of the invention determines that the source has precisely the temperature of the phase transition, the radiation of the source can be used directly, knowing that its intensity and spectrum are those characteristics for the transition temperature. Also, the device of the invention can be configured, in embodiments, to identify the phase change and calibrate a temperature sensor-possibly the resistance of the heating elements themselves-against the transition temperature, which is known *a priori.* Thanks to this, the operating temperature of the source can be set precisely at a desired value different from the transition temperature but linked thereto, independent from ageing of the emitter, environmental fluctuations, changes in the electronics drive, and other disturbing effects.

Preferably, the heaters are the same metallic arms holding the plate in place. This is advantageous because, even if the heating current flows also through the plate, most of the power is dissipated in the arms, where the cross-section is smaller and the resistance is higher, and the temperature on the surface of the plate is remarkably constant.

Since most of the materials that could be used to make the plate would react with the atmospheric gases at the working temperature, the light source comprising the plate and, the heaters, is in an evacuated space or in a container filled with inert gas at low pressure.

Optionally, a reflector facing the back side of the plate creates a cavity that is filled with radiation in thermal equilibrium with the incandescent plate. In embodiments, the emitting surface of the plate shadows the reflector completely or in large part.

The phase-change material may be deposited on the second surface of the plate, facing the substrate. In this manner, the emissivity of the emitting surface remains that of the base material of the plate (for example, tungsten) independently from the amount of material left.

If the emissivity of the phase-change material is well-characterised, it may be deposited also on the emitting surface in addition, or in alternative, to the second surface. This may be advantageous to prevent spills of molten material on the substrate.

The phase-change material may be also applied totally or in part to the heaters. In this variant, the material is spaced apart from the emitting surface and closer to the region where the heat is produced, which may result in a faster control time. The amount of phase-change material may be limited by the available area, however.

In embodiments, the inventive device may include a control circuit, for example a feedback circuit, that maintains the emitter at the phase change temperature, or to another temperature that is in a predetermined relationship with the phase change temperature. The control circuit is configured to alter the drive power to achieve this goal.

As mentioned above, the power drive may be pulsed to allow the observation of the change of phases. A feedback loop would be implemented such that the resistance does not change with the power modulation. (slow drive can occur).

In a possible mode of operation, the emission intensity and the resistance of the heaters are measured at the temperature of the phase change, then the device is operated at a different power, below or above the transition temperature, controlling the resistance such that it is a given fraction of the resistance at the transition temperature. The ratio between the resistance at the operation point and the resistance at the transition point may be, for example a predetermined value between 90% and 110%, or any other suitable value. In this manner of operating the device, the temperature curve of the heaters is not explicitly calibrated; nevertheless, the operating temperature is linked to the known temperature of the phase change. The measure of the resistance at the temperature of the phase change can be repeated as often as needed, for example hourly, to suppress aging, drift, and other undesirable disturbances.

This mode of operation is beneficial to the operating life of the device, since, by choosing an operating temperature below the melting point of the phase-change substance, the latter is in a solid state most of the time. Moreover, the control system may be simpler to implement.

The number of phase transitions observable in the device of the invention is not limited to one. Variants of the invention may exhibit a second phase transition at a different transition temperature than the first one, or any number of phase transitions at different temperatures. Having more than one phase transitions provides multiple reference temperatures and allows choosing a precise operating point in an extended range of temperature. This may be achieved by determining the resistance of the device at the known temperatures where the phase changes occur and interpolating or extrapolating the resistance to determine the resistance value corresponding to a desired operating temperature.

According to the needs, the phase-change material or materials may be patterned or deposited in a continuous layer on the plate and/or on the heater rather than covering the whole available surface.

In the present disclosure the wordings "infrared radiation", "infrared light" and "IR light" are treated as equivalent or synonyms and denote an electromagnetic radiation with a wavelength belonging to the range between 0.8 μm to 20 μm. Similarly, "visible light" and "visible radiation" refer to emissions with a wavelength between 0.4 μm and 0.8 μm. The sources treated in this disclosure are grey- or blackbody broadband and emit at the same time both in the infrared and in the visible spectrum but may be denoted by any one of the above expressions according to where the dominant emission or the emission of interest lies.

In the same context, the terms "plate", "membrane" will be used to denote elements whose thickness is lower than its other two dimensions. In embodiments, the thickness of the membrane may be less than 1/10th or even less than 1/100th of the other two dimensions. "hot-plate" and "micro hot-plate" may be used as synonyms. Preferably, the membranes are self-supporting and can be held in positions by a limited number of anchor points at their periphery. and are essentially planar. Importantly, the membranes of the invention are configured and supported such that they do not break or distort severely at the intended operating temperature, although a certain degree of deformation is unavoidable and acceptable.

The invention uses, in embodiments, an evacuated envelope to protect the source from the atmosphere and reduce heat losses. The expression "vacuum" is used in this disclosure to designate any pressure below standard conditions, preferably not above 1 mbar, better $10^{-3}$ mbar or less.

## Short description of the drawings

Exemplar embodiments of the invention are disclosed in the description and illustrated by the drawings in which:

Figures 1a and 1b illustrate schematically the structure of the incandescent membrane of the invention, in two variants. The first one has a circular general shape and is supported by acuate arms. The latter is square and the short arm that hold it in place include each an optional compliant structure.

Figure 2 shows a device according to the invention, in section.

Figure 3 plots the time-evolution of the electric resistance of a device according to the invention.

Figure 4 is a phase diagram of a binary system that, when used in the invention, provides more than one reference points.

Figure 5 shows, schematically, a possible structure of a control circuit used in the invention.

Figure 6 illustrates some step of a process of the invention, as a flowchart.

In the figures, remarkable elements are identified by reference signs that are repeated in the text. The same reference sign may be used to identify distinct elements that are identical, similar, or technically equivalent. When many identical, similar or equivalent elements occur on a drawing, some reference signs may have been omitted to avoid cluttering the figure.

## Examples of embodiments of the present invention

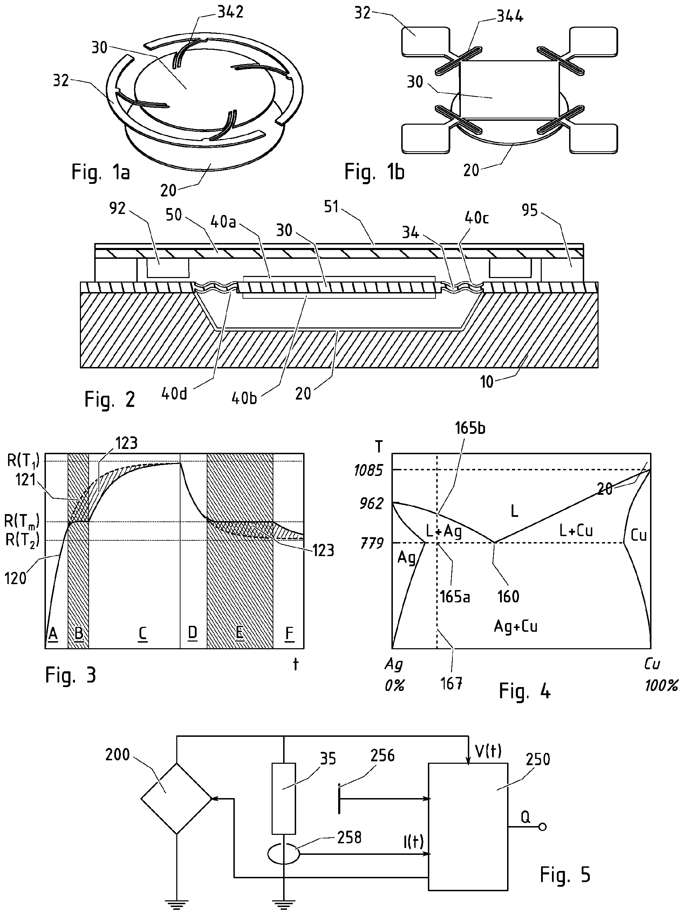

With reference to **figures 1a** and **1b,** the source of the invention has a plate **30** that is designed to be heated resistively to an incandescent state. The heating action is obtained by connecting the source to a power source such that the plate, and especially the support arms **342, 344** carry a suitable current. Importantly, since the cross section of the arms is considerably less than that of the plate itself, the heating power is localised in the arms, mostly, and the heat is conducted from the arms to the plate 30, whose temperature in operation is sensibly uniform.

Preferably the plate **30** and the arms **342, 344** are fabricated out of a conductive and refractory material that can stand the temperature at which the plate is designed to operate. In most cases of practical interest, the operating temperature will be above 800 K, often above 2000 K. Materials capable of operating at these temperatures include refractory metals such as tungsten, tantalum, molybdenum, niobium, rhenium, conducting refractory ceramics such as tungsten carbide, hafnium carbide, graphite, and many other.

The source of the invention comprises in general a housing, not represented, to protect the incandescent emitter. Most materials, including tungsten, react readily with atmospheric gases ($O_2$, $N_2$, $CO_2$) at high temperature. To prevent this, the emitter may be in an evacuated space, which also minimise thermal losses. The housing could also be filled with a gas composition based on an inert gas, such as Argon or Xenon.

In the depicted embodiment, the plate is suspended above a reflector **20** by the arms **342, 344,** such that the back surface of the plate is facing the reflector **20.** The reflector may comprise a layer of a substance that reflects most of the IR or visoble radiation emitted by the plate **30.** Gold-metallised mirrors have been used with good success in this application. The reflector is especially advantageous when the source is meant to operate at very high temperatures but may be dispensed with at lower temperatures, or when the radiation of interest is at longer wavelengths for example at wavelengths greater than three microns.

The inventors found that a certain degree of elasticity and/or compliance in the arms **342, 344** provides an elastic buffer against the expansion and contraction over the large temperature changes that the device must withstand and increases the useful life of the device. In figure 1a, the flexibility is provided by slender arms **342** that have an arcuate form and meet the plate **30** at an angle, rather than radially. When heated to the operating temperature, thermal expansion is absorbed by a deformation of the arms **342** and a rotation of the whole plate **30** around the central axis.

Figure 1b presents a different structure that allows to achieve the same goal. Here compliant structures on the arms **344** take care of the thermal expansion. Many other flexible and compliant structures are possible and included in the scope of the invention. The examples shown have arms that are co-planar with the plate **30,** which eases the fabrication, but this is not a necessary limitation.

**Figure 2** is a simplified representation of a device according to the invention, in section. The device is built on a substrate **10,** which may be silicon, or another suitable material, preferably with a high thermal conductivity. The plate **30** is suspended by the arms **34** above a recess in the substrate, and the reflector **20** is realised by a suitable IR-reflecting layer, for example a thin film of gold. The window **50** above the plate **30** is a of a suitable material transparent to the desired radiation, such as glass, sapphire, germanium, diamond, silicon, or other. The distance between the window **50** and the plate **30** is defined by the spacing layer **95.**

If required, the source may include a filter layer **51** that transmits a part of the spectrum generated by the emitter **30** and reflects part of the radiation back to the emitter or absorbs it. An anti-reflective coating may also be added.

As mentioned above, the emitter is protected from the atmospheric gases by a suitable envelope, not represented, and lies in an evacuated space, or in a protective atmosphere. A getter **92** may be used to maintain the vacuum or the purity of the protective atmosphere.

The heat generated in the heating arms **30** is dissipated radiatively by the plate **30** and by thermal conduction towards the substrate **20.** In a situation where the heat power is constant, the plate will find an operating temperature at which the power losses equal the input power.

Importantly, the source of the invention comprises a phase-change material exhibiting a change of phase at a transition temperature that is in an operating temperature range of the light source. **Figure 3** show the resistance of an emitter according to the invention that includes a layer of phase-change material, as a function of time. The resistance of the emitter is directly related to its temperature.

The plot represents the resistance of the device (line **120**) rising from the cold state to an equilibrium value where the electric power equals the thermal losses. Three segments can be identified in the time axis. In the first, marked **"A",** the temperature-and the resistance-rise from the initial values, corresponding to the cold state. The temperature is below the phase change temperature of the phase-change materials **40.** The radiative losses can be approximated by the Stefan-Boltzmann's law:

$$P = A \ \varepsilon(T)\sigma T^4$$

where A denotes the area of the emitter, $\varepsilon$ the temperature-dependent emissivity of the plate, and $\sigma$ is the Stefan-Boltzmann constant. One observes an increase of the resistance with a progressively diminishing slope.

In the segment **"B"** the resistance does not rise any more. The heaters and/or the plate have attained the phase-change temperature. The power difference between the Joule heating and the heat dissipation is entirely consumed by the latent heat of the material that is undergoing the phase transition. In this regime, the temperature is sensibly constant, and equal to the temperature $T_m$ of the phase change.

Eventually, all the available material changes phase, and the resistance, with the temperature, start to rise again (segment **"C"**) until the whole plate thermalizes at the temperature $T1$.

Starting from segment **"D",** the heating power is reduced, and the temperature of the plate drops until, in segment **"E"** it reaches the temperature $Tm$ again where the phase change material starts freezing and the temperature remains essentially constant. Only in segment **"F",** when the phase change material is completely solidified, the temperature starts to drop towards the new equilibrium value $T2$.

lines **121** represent the notional temperature profile of an emitter with the same thermal capacity and emissivity, but without any phase transition. The temperature rises to $T_1$ and falls to $T_2$ continuously, without the horizontal plateaux that characterize the phase transition. It can be shown that the hatched areas **123** between the plots **120** and **121** are proportional to the latent heat consumed in the melting, respectively freezing of the phase change material. It can be seen also that, since $T2$ is considerably closer than $T_1$ to the melting point $Tm,$ the horizontal plateau in **"E"** is longer than that in **"B".**

The plot of figure 3 represents the temperature of the emitter through the resistance of the heaters. While the temperature and the resistance are directly related, the resistance can be measured only to the limit of the instrumental errors, and the temperature-resistance relationship cannot be known with absolute certainty, because it depends on the exact geometry of the device, on its age, and other parameters. The temperature of the change of phase, in contrast, is very precisely known for any given substance.

The device of the invention can then determine the occurrence of the plateaux in **"B"** and **"E"** control the power to maintain the temperature at the phase change point. Also, the device can record the value of $R(Tm)$, the resistance at the melting point (or equivalently, freezing point), and use it to calibrate the $R(T)$ function of the heaters, or control the heating power such that the resistance remains constant at a different value, in a predetermined relationship with $R(T_m)$, for example such that $R=a \cdot R(Tm)$, where $a$ denotes a predetermined ratio. The device may also evaluate the areas 123 and the corresponding values of the latent heat, which offer a measure of the residual amount of phase transition material.

Preferably, the invention uses materials that are solid at ambient temperature and melt, or sublimate, at a known transition temperature. There are many suitable materials that have a phase change at a transition temperature between 800 K and 3000 K, for example, the following materials exhibit a melting point in that temperature range.

Table 1 lists the latent heat of fusion, the melting point ant the vapour pressure for some elements that may be used as phase-change materials to provide a stable working point according to the invention.

Table 1

|  | $H_{fus}$ [J/g] | m.p [K] | Temperature for Vapor pressure = 1 Pa) [K] |
|---|---|---|---|
| Al | 396 | 933 | 1482 |
| Be | 1356 | 1558 | 1462 |
| C | 356 | 3825 | 2700 |
| Cr | 394 | 2133 | 1656 |
| Co | 275 | 1768 | 1790 |
| Cu | 206 | 1357 | 1509 |
| Au | 63 | 1336 | 1646 |
| Ir | 135 | 2739 | 2713 |
| Fe | 247 | 1811 | 1728 |
| Mg | 358 | 923 | 701 |
| Mn | 240 | 1517 | 1228 |
| Mo | 375 | 2893 | 2742 |
| Ni | 293 | 1726 | 1783 |
| Nb | 288 | 2743 | 2942 |
| Os | 163 | 3306 | 3160 |
| Pt | 103 | 2041 | 2330 |
| Rh | 211 | 2238 | 2288 |
| Se | 68 | 493 | 500 |
| Si | 1787 | 1684 | 1908 |
| Ag | 105 | 1235 | 1283 |
| Ta | 199 | 3253 | 3297 |
| Th | 69 | 2023 | 2633 |
| Sn | 59 | 505 |  |
| Ti | 390 | 1943 | 1982 |
| W | 190 | 3673 | 3477 |
| V | 448 | 2173 | 2101 |
| Zn | 112 | 693 | 610 |

Preferably, the material of the hot plate will exhibit a low heat capacity (heat capacity of pure tungsten is 134 J/(Kg K) ). Phase change materials with a higher latent heat are advantageous. Ideally, the phase-change material should wet the substrate on which it is deposited, to avoid balling up or dripping of molten material. Al, Cu, Au, Ag, Ni, Pd, Pt, Nb, Mo wet tungsten and, should provide an even film of liquid metal on the surface.

Sublimating materials, such as Cr, Zn, Cd, As, Sb avoid the problem of the liquid phase entirely, but may be difficult to use in a sealed evacuated envelope. Vapour pressure defines the maximum operational life and should be as low as possible to minimise evaporation.

Several combinations may be used in the invention, according to the desired used case. Molybdenum, for example, wets tungsten and has a reasonable latent heat. It may be used to provide a thermal radiation source that has a stable working point at its melting point of 2894 K. Niobium, Gold, Silicon, iridium and other suitable substances could also be used, at their respective melting point.

The invention is not limited to having a single phase transition at one temperature, and may include two or more phase-change materials with distinct melting points, for example, and obtain in this way two reference temperature points. These temperature points can be used to calibrate more precisely the resistance of the heaters as a function of the temperature, or control the power at a desired operating temperature, relative to the melting points.

Alloys can be used in lieu of pure materials, particular those mixture system that present a eutectic point at a given composition. In theory any phase changes including latent heat can be used in the frame of the invention, but the transitions with a favourably high latent heat are between solid and liquid, mostly. It may be possible to use multiple phase transitions in an alloy to define multiple transition temperatures. **Figure 5,** for example, shows a simplified phase diagram of the Ag+Cu system, and may be applied to several binary systems as well. The vertical line **167** is the locus of the states of a given selected composition of an alloy of Silver and Copper. When the temperature reaches the eutectic temperature (779 K, the eutectic point is labelled as **160**)**,** the system exhibits a first change of state (point **165a**) at the solidus line between the solid solution Ag+Cu and a mixture of solid silver and molten alloy (L+Ag). This transition involves a latent heat and can be used as a reference point in the invention.

As the temperature rises, the same composition meets, in point **165b,** the liquidus line where the L+Ag phase is in equilibrium with the liquid alloy (L) This provides a second reference point that can be used in the invention.

The phase change material may be provided on any heated surface of the source, either of the plate or of the heaters. In may be deposited in a film on the emitting surface of the heater (position **40a** in figure 2), provided its emissivity is well characterised and sufficiently high. It may also be on the lower side of the plate, facing the substrate (position **40b**). In alternative, or in addition, the phase change material may be on the upper side of the heaters **(40c)** or on their lower side **(40d).** In all these locations, the phase change materials may be deposited as a continuous film, or patterned.

**Figure 5** is an idealized structure of a control circuit that may be used, in the invention, to stabilise the operating point on a fixed point of temperature marked by a change of phase. The power source **200** is a controlled source that supplies the heaters **35,** here represented as a simple resistive load. The power source 200 may approximate an ideal voltage source, a real source with a suitable internal resistance or an active power source with a I/V characteristics designed to provide fast heating and stable operation at the desired operating point of the light source. A monitor and control circuit **250** is configured to monitor the heater's resistance R(t), which is a measure of their instantaneous temperature. This can be achieved by measuring the voltage drop V(t) and the current I(t) of the heaters **50,** or in any other way. The current may be read by a sensor **258** (for example a shunt resistor, a current transformer, or a Hall sensor), or it may be obtained in any other way.

The monitor and control circuit **250** is configured to detect, for example by observing when the first derivative *dR/dt* is close to zero, the plateau that indicates that the phase change material is melting or freezing. The circuit 250 could then generate a signal Q indicating that the emitter is at the desired temperature and, as soon as the resistance drifts away from the stable value, correct the setting of the programmable source 200 to stabilise the system on the transition temperature of the phase change.

The monitor and control circuit may also include a sensor of the radiated intensity **256.** Since the phase transition of the material is also accompanied by a change in the emissivity $\varepsilon$ of the material, the phase transition may also be visible as a discontinuity in the emitted luminous power. In these cases, the monitor and control circuit is configured to use this information in place of or together with the resistance $R(t)$ to determine when the phase transitions occur.

The power source **200** is preferably a pulsed one, delivering short pulses. The control loop should be faster than the thermalisation time of the emitting plate to better detect the delay in the heating-or cooling-caused by the phase change. The monitor and control circuit **250** may be configured to change the amplitude and/or the width and/or the repetition frequency of the pulses to stabilise the temperature of the system.

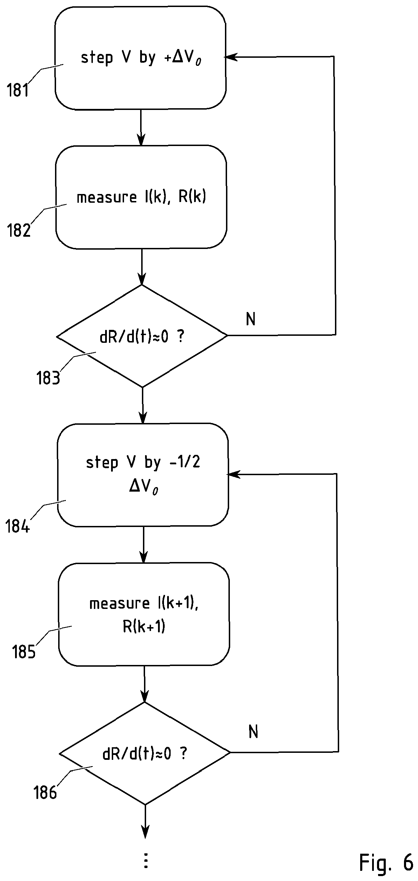

**Figure 6** represents, in a flowchart, a possible process to determine the occurrence of the phase transitions. In this example, starting from an initial state below the melting point, the heating voltage, which may start from an initial value V = 0 is increased stepwise by a determined amount $\Delta V_0$ (step **181**) then, in step **182** the instantaneous values of current and resistance are measured. In step **183** the control system decides whether there is a change of phase, for example by detecting a plateau where $dR/dt \approx 0$.

If no melting is observed, the process returns to step **181** where the heating voltage is further increased by $\Delta V_0$ and the measure is repeated. Otherwise, in step **184** the heating voltage is reduced by a half-step - $1/2\Delta V_0$, optionally after a delay, and the resistance is evaluated again (step **185**). In step **186** the control system decides whether the system is at the phase change temperature or, if required, reduces the voltage further by branching to the step **184.**

In successive iteration (not illustrated in the flowchart), the process applies progressively decreasing voltage steps of amplitude $\pm \Delta V_0/(N + 1)$ to the heating voltage. $N$ denotes the number of observed phase transition and the sign of the step is positive when the temperature is below the transition point, negative when it is above.

This method converges to a temperature equal to the melting temperature, $T = T_m$, provided the initial step $\Delta V_0$ is chosen small enough such that the first phase transition is not missed. Eventually, the steps become so small that the transition is no longer observable. This may be remedied by applying a minimum and a maximum value to the step amplitude to avoid a runaway.

The process represented in figure 6 can be used to maintain the device of the invention at the temperature of the phase change for an extended interval, by varying the heating voltage up and down by progressively diminishing steps. Other processes to achieve this goal are possible, however.

**Reference symbols in the figures**

| | |
|---|---|
| 10 | substrate |
| 20 | mirror |
| 30 | plate |
| 32 | contact pad |
| 34 | arm |
| 35 | electrical resistance of the heaters |
| 40a | phase change material, on a top side of the plate |
| 40b | phase change material, on a bottom side of the plate |
| 40c | phase change material, on a top side of an arm |
| 40d | phase change material, on a bottom side of an arm |
| 50 | window |
| 51 | filter |
| 92 | getter |
| 95 | spacer, support |
| 120 | plot of the temperature |
| 121 | plot of the temperature without phase transitions |
| 123 | area proportional to the latent heat |
| | A initial rise |
| | B interval of constant temperature-melting or sublimation |
| | C thermalisation |
| | D initial drop |
| | E interval of constant temperature-freezing |
| | F thermalisation |
| 160 | eutectic point |
| 165 | phase transition, transition temperature |
| 167 | selected composition |
| 181 | voltage step up |
| 182 | measure of resistance |
| 183 | search for a plateau |
| 184 | voltage step down |
| 185 | measure of resistance |
| 186 | search for a plateau |
| 200 | power source |
| 250 | monitor and control unit |
| 256 | radiantion sensor |
| 258 | current sensor |
| 342 | arcuate arm |
| 344 | arm with compliant structure |

**Claims**

1. A visible/IR light source comprising a plate and one heater or a plurality of heaters arranged to heat the plate to an incandescent state such that an emitting surface of the plate emits radiation in the infrared and/or visible spectrum and a phase-change material exhibiting a change of phase at a transition temperature that is in an operating temperature range of the light source, the phase-change material lying on a surface of the plate or on a surface of the heater or heaters.

2. The light source of the preceding claims, wherein the phase-change material exhibits sublimation at the transition temperature.

3. The light source of any one of the preceding claims, wherein the phase-change material is any one of Al, Ti, Be, Rh, V, Cu, Au, Ag, Ni, Pd, Pt, Mo, Nb, Ir, Pt, Zn, Cr, Sb, Cd, As, Si, or an alloy thereof.

4. The light source of any one of the preceding claims, wherein the phase-change material melts at the transition temperature and, in the liquid state, wets a material of the surface on which it lies.

5. The light source of any one of the preceding claims, wherein the transition temperature is between 800 K and 3000 K.

6. The light source of any one of the preceding claims wherein the phase-change material is an alloy exhibiting at least a second phase change at a second transition temperature different from the transition temperature, or the light source comprises at least a second phase-change material exhibiting a second phase change at a second transition temperature different from the transition temperature.

7. The light source of any one of the preceding claims, comprising a monitoring and control unit configured to determine that the temperature is at the transition temperature by detecting a plateau of temperature in a heating or cooling phase of the plate.

8. The light source of the preceding claim, wherein the monitoring and control unit is configured to measure an electric resistance of said heater or heaters or to measure a radiation emitted by the plate.

9. The light source any one of the preceding claims, wherein the heater or heaters are conductive arms holding the plate.

10. The light source any one of the preceding claims including a reflector parallel to and separate from the substrate a second surface of the plate.

11. The light source of any one of the preceding claims, wherein the plate and the heater or heaters are in a vacuum.

12. The light source of any one of the preceding claims, the plate being essentially flat and having a surface of 0.3 square mm or less.

13. The light source of any one of the preceding claims, wherein the phase-change material or the phase-change materials are patterned on said surface of the plate or of the heater or heaters.

14. The light source of any one of the preceding claims, wherein the phase-change material forms a continuous layer on said surface of the plate or of the heater or heaters.

15. The light source of any one of the preceding claims, wherein the phase-change material is on the emitting surface and/or on the second surface, and/or on a surface of the heater or heaters.

16. A method of controlling a light source that comprises an incandescent plate and a phase-change material that changes phase at a transition temperature that is in an operating temperature range of the light source on a surface of the plate the method including the steps of heating the plate to incandescence, detecting a phase change of the material indicating that the plate is at the transition temperature, wherein the heating is obtained by passing a current through one resistive heater, or a plurality of resistive heaters, and the phase change is detected by sensing that a resistance of the heater or of the heaters is constant, controlling the current such that the temperature of the incandescent plate is held at a desired temperature having a predetermined relationship to the the transition temperature.

Fig. 1a

Fig. 1b

Fig. 2

Fig. 3

Fig. 4

Fig. 5

```
          ┌─────────────────────┐
     181  │   step V by +ΔV₀     │←──────┐
          └─────────────────────┘        │
                    │                     │
                    ▼                     │
          ┌─────────────────────┐        │
     182  │   measure I(k), R(k) │        │
          └─────────────────────┘        │
                    │                     │
                    ▼                     │
                  ╱   ╲          N        │
     183        ╱ dR/d(t)≈0 ? ╲──────────┘
                ╲           ╱
                  ╲       ╱
                    │
                    ▼
          ┌─────────────────────┐
     184  │  step V by –1/2      │←──────┐
          │      ΔV₀             │        │
          └─────────────────────┘        │
                    │                     │
                    ▼                     │
          ┌─────────────────────┐        │
     185  │  measure I(k+1),     │        │
          │      R(k+1)          │        │
          └─────────────────────┘        │
                    │                     │
                    ▼                     │
                  ╱   ╲          N        │
     186        ╱ dR/d(t)≈0 ? ╲──────────┘
                ╲           ╱
                  ╲       ╱
                    │
                    ▼
                    ⋮
```

Step 181: step V by $+\Delta V_0$

Step 182: measure I(k), R(k)

Step 183: $dR/d(t) \approx 0$ ?

Step 184: step V by $-1/2 \, \Delta V_0$

Step 185: measure I(k+1), R(k+1)

Step 186: $dR/d(t) \approx 0$ ?

Fig. 6

Europäisches
Patentamt

European
Patent Office

Office européen
des brevets

# EUROPEAN SEARCH REPORT

**Application Number**

EP 24 17 7420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 060 246 A (HITACHI LTD) 29 April 1981 (1981-04-29) * abstract * * page 1, line 3 - page 3, line 120; figures 1-3 * | 1,2,4,5, 11,14,15 | INV. H01K1/04 G01J5/53 H01K1/14 H01K1/62 H05B3/12 H05B3/20 |
| X | US 2006/076868 A1 (PULLINI DANIELE [IT] ET AL) 13 April 2006 (2006-04-13) * abstract * * paragraphs [0001], [0017] - [0029], [0042] - [0088]; claims 29,35; figures 2-6,13,14 * | 1,3-5, 13-15 | |
| X | HAN HAN ET AL: "Programmable solid state atom sources for nanofabrication", NANOSCALE, vol. 7, no. 24, January 2015 (2015-01), pages 10735-10744, XP93215319, United Kingdom ISSN: 2040-3364, DOI: 10.1039/C5NR01331C Retrieved from the Internet: URL:https://pubs.rsc.org/en/content/articl epdf/2015/nr/c5nr01331c> * abstract * * page 10735, right-hand column, line 11 - page 10740, left-hand column; figures 1a,b,2,3 * * page 10741, right-hand column, line 14 - page 10743, right-hand column, line 33; figure 9 * -& Han Han ET AL: "Programmable Solid State Atom Sources for Nanofabrication - Electronic Supplementary Information", , 25 May 2015 (2015-05-25), XP93215592, Retrieved from the Internet: URL:https://www.rsc.org/suppdata/c5/nr/c5n r01331c/c5nr01331c1.pdf * pages 3-14; figures S3,S4,S7,S10 * | 1-5,7,8, 11,13-16 | |

**TECHNICAL FIELDS SEARCHED (IPC)**

H01K
G01J
H05B

The present search report has been drawn up for all claims

| Place of search | Date of completion of the search | Examiner |
|---|---|---|
| Munich | 10 April 2025 | Lang, Thomas |

EPO FORM 1503 03.82 (P04C01)

Europäisches
Patentamt

European
Patent Office

Office européen
des brevets

**Application Number**

EP 24 17 7420

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1, 2, 4, 5, 7, 8, 11, 13-16(completely); 3(partially)

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1, 2, 4, 5, 11, 13-15(completely); 3(partially)

    A visible/IR light source comprising a plate and one heater or a plurality of heaters arranged to heat the plate to an incandescent state such that an emitting surface of the plate emits radiation in the infrared and/or visible spectrum and a phase-change material exhibiting a change of phase at a transition temperature that is in an operating temperature range of the light source, the phase-change material lying on a surface of the plate or on a surface of the heater or heaters (claim 1), wherein the phase-change material exhibits sublimation at the transition temperature (claim 2).
    
    ---

2. claim: 3(partially)

    The light source of at least claim 1, wherein the phase-change material is any one of Al, Ti, Be, Rh, V, Ni, Pd, Pt, Mo, Nb, Ir, Zn, Cr, Sb, Cd, As, Si.
    
    ---

3. claims: 6(completely); 3(partially)

    The light source of at least claim 1, wherein the phase-change material is an alloy exhibiting at least a second phase change at a second transition temperature different from the transition temperature, or the light source comprises at least a second phase-change material exhibiting a second phase change at a second transition temperature different from the transition temperature (claim 6); or wherein the phase-change material is an alloy of the elements listed in claim 3 (claim 3, last alternative).
    
    ---

4. claims: 7, 8, 16

    The light source of at least claim 1, comprising a monitoring and control unit configured to determine that the temperature is at the transition temperature by detecting a plateau of temperature in a heating or cooling phase of the plate (claims 7-8), or a method of controlling a light source that comprises an incandescent plate and a phase-change material that changes phase at a transition temperature that is in an operating temperature range of the light source on a surface of the plate the method including the steps of heating the plate to incandescence, detecting a phase change of the material indicating that the plate is at the transition temperature, wherein the heating is obtained by passing a current through one resistive heater, or a plurality of resistive heaters, and the phase change is

Europäisches
Patentamt

European
Patent Office

Office européen
des brevets

**LACK OF UNITY OF INVENTION
SHEET B**

**Application Number**

EP 24 17 7420

The Search Division considers that the present European patent application does not comply with the
requirements of unity of invention and relates to several inventions or groups of inventions, namely:

> detected by sensing that a resistance of the heater or of
> the heaters is constant, controlling the current such that
> the temperature of the incandescent plate is held at a
> desired temperature having a predetermined relationship to
> the the transition temperature (claim 16).
>
> ---

5. claim: 9

> The light source of at least claim 1, wherein the heater or
> heaters are conductive arms holding the plate.
>
> ---

6. claim: 10

> The light source of at least claim 1, including a reflector
> parallel to and separate from the substrate a second surface
> of the plate.
>
> ---

7. claim: 12

> The light source of at least claim 1, the plate being
> essentially flat and having a surface of 0.3 square mm or
> less.
>
> ---

page 2 of 2

## ANNEX TO THE EUROPEAN SEARCH REPORT
## ON EUROPEAN PATENT APPLICATION NO.

EP 24 17 7420

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | | Publication date | Patent family member(s) | | Publication date |
|---|---|---|---|---|---|
| GB 2060246 | A | 29-04-1981 | GB | 2060246 A | 29-04-1981 |
| | | | JP | S5652835 A | 12-05-1981 |
| | | | US | 4400648 A | 23-08-1983 |
| US 2006076868 | A1 | 13-04-2006 | AT | E349772 T1 | 15-01-2007 |
| | | | AU | 2003289669 A1 | 28-09-2004 |
| | | | CN | 1748283 A | 15-03-2006 |
| | | | DE | 602004003916 T2 | 14-06-2007 |
| | | | EP | 1599892 A2 | 30-11-2005 |
| | | | ES | 2277242 T3 | 01-07-2007 |
| | | | JP | 2006520074 A | 31-08-2006 |
| | | | US | 2006076868 A1 | 13-04-2006 |
| | | | WO | 2004079773 A2 | 16-09-2004 |
| | | | WO | 2004079897 A2 | 16-09-2004 |

EPO FORM P0459

For more details about this annex : see Official Journal of the European Patent Office, No. 12/82

**REFERENCES CITED IN THE DESCRIPTION**

**Patent documents cited in the description**

- US 3077539 A
- DE 10110131 A1
- US 7837382 B2
- WO 2021144463 A